# EUROPEAN PATENT APPLICATION

(11) **EP 4 590 034 A1**
(43) Date of publication of application: **23.07.2025**
(21) Application number: 23870149.4
(22) Date of filing: 31.08.2023
(51) Int. Cl.: H04W 52/02

(54) **COMMUNICATION METHOD, APPARATUS AND SYSTEM**

(30) Priority: 30.09.2022 CN 202211230950
(71) Applicant: Huawei Technologies Co., Ltd., Shenzhen, Guangdong 518129 (CN)
(72) Inventor: LUO, Zhihu, Shenzhen, Guangdong 518129 (CN); JIN, Zhe, Shenzhen, Guangdong 518129 (CN); SUN, Huan, Shenzhen, Guangdong 518129 (CN); QU, Weilin, Shenzhen, Guangdong 518129 (CN)
(74) Representative: Körber, Martin Hans
(86) International application number: PCT/CN2023/116299
(87) International publication number: WO 2024/066909

(57) **Abstract**

This application provides a communication method, an apparatus, and a system, and the communication method, the apparatus, and the system are applicable to the IoT field, so that transmission efficiency and communication quality can be improved. The method includes: A terminal device sends first indication information to a network device, where the first indication information indicates information about a quantity of receive antennas of a first receiver of the terminal device; and the terminal device receives, through the first receiver, a wake-up signal sent by the network device.

## Description

### TECHNICAL FIELD

This application relates to the communication field, and more specifically, to a communication method, an apparatus, and a system.

### BACKGROUND

With development of science and technologies, internet of things (Internet of things, IoT) devices gradually enter life of people and gradually improve life of people.

To reduce power consumption of an IoT device, the device may enter a sleep state based on a power saving mode operation of IEEE 802.11. The device in the sleep state can enjoy lower power consumption, but a delay in receiving data is increased. Therefore, the device in the sleep state needs to periodically receive a wake-up signal from a network device, and determine, based on information carried in the wake-up signal, whether downlink data from the network device needs to be received.

To further reduce power consumption of the IoT device, in IEEE 802.11ba, two radio chains are designed and configured for the IoT device, and the two radio chains are referred to as a primary connection radio (primary connection radio, PCR) and a companion connection radio (companion radio, CR). The primary connection radio may also be referred to as a main receiver, and the companion connection radio may also be referred to as a wake-up receiver. After detecting the wake-up signal through the wake-up receiver, the device may trigger wake-up of the main receiver based on the wake-up signal, so that the main receiver can be configured for data transmission. Power consumption of the wake-up receiver is lower, and the wake-up receiver reuses all or some radio frequency hardware of the main receiver, so that costs can be reduced. However, a quantity, of receive antennas, supported by the wake-up receiver affects receiving performance and a coverage capability of the wake-up receiver. The main receiver and the wake-up receiver differ in receiving performance and coverage capabilities. This affects a transmission parameter used when the network device schedules transmission, reduces system transmission efficiency, and also causes a coverage hole problem. Consequently, communication quality is affected.

### SUMMARY

This application provides a communication method, an apparatus, and a system, so that transmission efficiency can be improved, and a coverage hole problem can be resolved, thereby improving communication quality.

According to a first aspect, a communication method is provided. The method is performed by a terminal device, or may be performed by a component (for example, a circuit or a chip) configured in the terminal device. This is not limited in this application.

The method includes: The terminal device sends first indication information to a network device, where the first indication information indicates information about a quantity of receive antennas of a first receiver of the terminal device; and the terminal device receives, through the first receiver, a wake-up signal sent by the network device.

Based on the foregoing technical solution, the terminal device may report, to the network device by using the first indication information, the information about the quantity, of receive antennas, supported by the first receiver of the terminal device, to assist the network device in determining a transmission parameter of the wake-up signal, thereby improving transmission efficiency. In addition, the foregoing technical solution improves implementation flexibility of the terminal device, so that the terminal device can select, based on an energy saving requirement or a coverage requirement of the terminal device, the information about the quantity, of receive antennas, supported by the first receiver for reporting.

For example, a smart appliance sends the first indication information based on an energy saving requirement of the smart appliance, and reports, to a base station, a quantity, of receive antennas, supported by a wake-up receiver. The base station receives the first indication information, and determines, by using the first indication information, the quantity, of receive antennas, supported by the wake-up receiver of the smart appliance, to adjust the transmission parameter of the wake-up signal, thereby improving the transmission efficiency.

In a possible design, the first indication information indicates the quantity, of receive antennas, supported by the first receiver.

In a possible design, the first indication information indicates that the quantity of receive antennas of the first receiver is the same as a quantity of receive antennas of a second receiver.

In this design, signaling overheads of the first indication information can be reduced. If the terminal device indicates, by using the first indication information, that the quantity, of receive antennas, supported by the first receiver is the same as the quantity, of receive antennas, supported by the second receiver, the terminal device does not need to additionally indicate a specific quantity of receive antennas of the first receiver, thereby reducing signaling overheads.

In a possible design, the first indication information indicates that the quantity of receive antennas of the first receiver is different from a quantity of receive antennas of the second receiver.

In a possible design, the terminal device sends second indication information to the network device, where the second indication information indicates the quantity, of receive antennas, supported by the first receiver.

In a possible design, the first indication information indicates that the quantity, of receive antennas, supported by the first receiver is one of 1, 2, or 4.

In a possible design, the first indication information indicates information about a frequency band supported by the first receiver, and there is an association relationship between the quantity, of receive antennas, supported by the first receiver and the information about the frequency band supported by the first receiver.

In this design, signaling overheads can be reduced. The terminal device indicates, by using the first indication information, the information about the frequency band supported by the first receiver. If the base station receives the first indication information, and determines the quantity of receive antennas based on the association relationship between the quantity, of receive antennas, supported by the first receiver and the information about the frequency band supported by the first receiver, the base station does not need to additionally receive indication information indicating a specific quantity of receive antennas of the first receiver, thereby reducing signaling overheads.

In a possible design, the first indication information indicates a quantity, of receive antennas, supported by the second receiver; and the quantity, of receive antennas, supported by the first receiver is the same as the quantity, of receive antennas, supported by the second receiver.

In this design, signaling overheads can be reduced. The terminal device indicates, by using the first indication information, the quantity, of receive antennas, supported by the second receiver. If the base station receives the first indication information, and determines, by using the fact that the quantity, of receive antennas, supported by the first receiver is the same as the quantity, of receive antennas, supported by the second receiver, the quantity, of receive antennas, supported by the first receiver, the base station does not need to additionally receive one piece of indication information to indicate the quantity of receive antennas of the first receiver, thereby reducing signaling overheads.

In a possible design, the method includes: The terminal device receives configuration information; and the terminal device in a first state enters a second state based on the configuration information.

In this design, the terminal device may change the state based on the configuration information. In consideration that the quantity, of receive antennas, supported by the first receiver is different from the quantity, of receive antennas, supported by the second receiver, coverage capabilities of the first receiver and the second receiver are different, and a larger quantity of receive antennas indicates larger coverage. Based on the configuration information, the terminal device may change the state that the terminal device is in, and communicate with the network device through different receivers, to avoid a coverage hole generated by a difference between the coverage capability of the first receiver and the coverage capability of the second receiver, thereby improving communication quality.

For example, a pedestrian carries an intelligent wearable device. When the pedestrian moves to a location close to the base station, the intelligent wearable device is in the first state, and receives, through the wake-up receiver, the wake-up signal sent by the base station. When the pedestrian moves to a location far away from the base station, and the quantity, of receive antennas, supported by the wake-up receiver of the intelligent wearable device cannot meet a coverage distance between the pedestrian and the base station, the intelligent wearable device enters the second state based on the configuration information, and communicates with the base station through a main receiver. Therefore, according to this design, the coverage hole generated by the difference between the coverage capability of the first receiver and the coverage capability of the second receiver can be avoided, thereby improving communication quality.

In a possible design, the configuration information is a first threshold.

In a possible design, the configuration information is a plurality of candidate thresholds, and there is an association relationship between different candidate thresholds and different quantities, of receive antennas, that may be supported by the first receiver; and the terminal device determines the first threshold from the plurality of candidate thresholds based on the quantity, of receive antennas, supported by the first receiver.

In this design, the terminal device can more accurately determine, based on different quantities, of receive antennas, that may be supported by the first receiver, an occasion for entering the second state from the first state, thereby further improving communication quality.

In a possible design, the configuration information is one candidate threshold and one or more pieces of offset information; there is an association relationship between the candidate threshold and one quantity, of receive antennas, that may be supported by the first receiver; and there is an association relationship between the different offset information and different quantities, of receive antennas, that may be supported by the first receiver. The terminal device determines first offset information from the one or more pieces of offset information based on the quantity, of receive antennas, supported by the first receiver; and the terminal device determines the first threshold with reference to the candidate threshold and the first offset information.

In this design, signaling overheads can be reduced. Signaling overheads required for configuring the offset information by the network device are usually lower than signaling overheads required for configuring the candidate threshold by the network device. The terminal device determines the first threshold with reference to one candidate threshold and one piece of offset information, so that the network device can achieve same configuration effect by using lower signaling overheads.

In a possible design, the method includes: The second receiver or the first receiver performs measurement based on a first reference signal, and obtains a measurement result, where the measurement result and the first threshold meet a first relationship; and the terminal device enters the second state from the first state.

According to a second aspect, a communication method is provided. The method is performed by a network device, or may be performed by a component (for example, a circuit or a chip) configured in the network device. This is not limited in this application.

The method includes: The network device receives first indication information sent by a terminal device, where the first indication information indicates information about a quantity of receive antennas of a first receiver of the terminal device; and the network device sends a wake-up signal to the terminal device based on the first indication information.

Based on the foregoing technical solution, the network device may determine, by using the first indication information, the information about the quantity, of receive antennas, supported by the first receiver of the terminal device, to determine a transmission parameter of the wake-up signal, thereby improving transmission efficiency. In addition, the foregoing technical solution improves implementation flexibility of the terminal device, so that the network device can learn of the information, about the quantity, of receive antennas, supported by the first receiver, that is selected by the terminal device based on an energy saving requirement or a coverage requirement of the terminal device.

For example, a smart appliance sends the first indication information based on an energy saving requirement of the smart appliance, and reports, to a base station, a quantity, of receive antennas, supported by a wake-up receiver. The base station receives the first indication information, and determines, by using the first indication information, the quantity, of receive antennas, supported by the wake-up receiver of the smart appliance, to adjust the transmission parameter of the wake-up signal, thereby improving the transmission efficiency.

In a possible design, the network device sends the first indication information to a core network.

In a possible design, the first indication information indicates the quantity, of receive antennas, supported by the first receiver.

In a possible design, the first indication information indicates that the quantity of receive antennas of the first receiver is the same as a quantity of receive antennas of a second receiver.

In this design, signaling overheads of the first indication information can be reduced. If the quantity, of receive antennas, supported by the first receiver is the same as the quantity, of receive antennas, supported by the second receiver, a specific quantity of receive antennas of the first receiver does not need to be additionally indicated, thereby reducing signaling overheads.

In a possible design, the first indication information indicates that the quantity of receive antennas of the first receiver is different from a quantity of receive antennas of the second receiver.

In a possible design, the network device receives second indication information sent by the terminal device, where the second indication information indicates the quantity, of receive antennas, supported by the first receiver.

In a possible design, the first indication information indicates that the quantity, of receive antennas, supported by the first receiver is one of 1, 2, or 4.

In a possible design, the first indication information indicates information about a frequency band supported by the first receiver, and there is an association relationship between the quantity, of receive antennas, supported by the first receiver and the information about the frequency band supported by the first receiver.

In this design, signaling overheads can be reduced. If the base station receives the first indication information, and determines the quantity of receive antennas based on the association relationship between the quantity, of receive antennas, supported by the first receiver and the information about the frequency band supported by the first receiver, the base station does not need to additionally receive indication information indicating a specific quantity of receive antennas of the first receiver, thereby reducing signaling overheads.

In a possible design, the first indication information indicates a quantity, of receive antennas, supported by the second receiver; and the quantity, of receive antennas, supported by the first receiver is the same as the quantity, of receive antennas, supported by the second receiver.

In this design, signaling overheads can be reduced. If the base station receives the first indication information, and determines, by using the fact that the quantity, of receive antennas, supported by the first receiver is the same as the quantity, of receive antennas, supported by the second receiver, the quantity, of receive antennas, supported by the first receiver, the base station does not need to additionally receive one piece of indication information to indicate the quantity of receive antennas of the first receiver, thereby reducing signaling overheads.

In a possible design, the network device sends configuration information to the terminal device, where the configuration information is used by the terminal device to enter a first state or a second state.

In this design, the terminal device may change the state based on the configuration information. In consideration that the quantity, of receive antennas, supported by the first receiver is different from the quantity, of receive antennas, supported by the second receiver, coverage capabilities of the first receiver and the second receiver are different, and a larger quantity of receive antennas indicates larger coverage. Based on the configuration information, the terminal device may communicate with the network device through different receivers, to avoid a coverage hole generated by a difference between the coverage capability of the first receiver and the coverage capability of the second receiver, thereby improving communication quality.

For example, a pedestrian carries an intelligent wearable device. When the pedestrian moves to a location close to the base station, the intelligent wearable device is in the first state, and receives, through the wake-up receiver, the wake-up signal sent by the base station. When the pedestrian moves to a location far away from the base station, and the quantity, of receive antennas, supported by the wake-up receiver of the intelligent wearable device cannot meet a coverage distance between the pedestrian and the base station, the intelligent wearable device enters the second state based on the configuration information, and communicates with the base station through a main receiver. Therefore, according to this design, the coverage hole generated by the difference between the coverage capability of the first receiver and the coverage capability of the second receiver can be avoided, thereby improving communication quality.

In a possible design, the configuration information is a first threshold.

In a possible design, the configuration information is a plurality of candidate thresholds, and there is an association relationship between different candidate thresholds and different quantities, of receive antennas, that may be supported by the first receiver.

In this design, the terminal device can more accurately determine, based on different quantities, of receive antennas, that may be supported by the first receiver, an occasion for entering the second state from the first state, thereby further improving communication quality.

In a possible design, the configuration information is one candidate threshold and one or more pieces of offset information; there is an association relationship between the candidate threshold and one quantity, of receive antennas, that may be supported by the first receiver; and there is an association relationship between the different offset information and different quantities, of receive antennas, that may be supported by the first receiver.

In this design, signaling overheads can be reduced. Signaling overheads required for configuring the offset information by the network device are usually lower than signaling overheads required for configuring the candidate threshold by the network device. The terminal device determines the first threshold with reference to one candidate threshold and one piece of offset information, so that the network device can achieve same configuration effect by using lower signaling overheads.

According to a third aspect, a terminal device is provided. The terminal device may perform the method provided in the first aspect. The terminal device specifically includes: a processing unit, configured to determine first indication information, where the first indication information indicates information about a quantity of receive antennas of a first receiver of the terminal device; and a transceiver unit, configured to send the first indication information to a network device, where the transceiver unit is further configured to receive, through the first receiver, a wake-up signal sent by the network device.

In a possible design, the first indication information indicates the quantity, of receive antennas, supported by the first receiver.

In a possible design, the first indication information indicates that the quantity of receive antennas of the first receiver is the same as a quantity of receive antennas of a second receiver.

In a possible design, the first indication information indicates that the quantity of receive antennas of the first receiver is different from a quantity of receive antennas of the second receiver.

In a possible design, the transceiver unit is further configured to send second indication information to the network device, where the second indication information indicates the quantity, of receive antennas, supported by the first receiver.

In a possible design, the first indication information indicates that the quantity, of receive antennas, supported by the first receiver is one of 1, 2, or 4.

In a possible design, the first indication information indicates information about a frequency band supported by the first receiver, and there is an association relationship between the quantity, of receive antennas, supported by the first receiver and the information about the frequency band supported by the first receiver.

In a possible design, the first indication information indicates a quantity, of receive antennas, supported by the second receiver; and the quantity, of receive antennas, supported by the first receiver is the same as the quantity, of receive antennas, supported by the second receiver.

In a possible design, the transceiver unit is further configured to receive configuration information; and the processing unit is further configured to enable, based on the configuration information, the terminal device in a first state to enter a second state.

In a possible design, the configuration information is a first threshold.

In a possible design, the configuration information is a plurality of candidate thresholds, and there is an association relationship between different candidate thresholds and different quantities, of receive antennas, that may be supported by the first receiver; and the processing unit is further configured to determine the first threshold from the plurality of candidate thresholds based on the quantity, of receive antennas, supported by the first receiver.

In a possible design, the configuration information is one candidate threshold and one or more pieces of offset information; there is an association relationship between the candidate threshold and one quantity, of receive antennas, that may be supported by the first receiver; and there is an association relationship between the different offset information and different quantities, of receive antennas, that may be supported by the first receiver. The processing unit is further configured to determine first offset information from the one or more pieces of offset information based on the quantity, of receive antennas, supported by the first receiver; and the processing unit is further configured to determine the first threshold with reference to the candidate threshold and the first offset information.

In a possible design, the transceiver unit is further configured to receive a first reference signal through the first receiver or the second receiver; the processing unit is further configured to perform measurement based on the first reference signal, and obtain a measurement result, where the measurement result and the first threshold meet a first relationship; and the processing unit is further configured to enable the terminal device in the first state to enter the second state.

According to a fourth aspect, a network device is provided. The network device may perform the method provided in the second aspect. The network device specifically includes: a transceiver unit, configured to receive first indication information sent by a terminal device; and a processing unit, configured to determine information about a quantity of receive antennas of a first receiver of the terminal device based on the first indication information, where the transceiver unit is further configured to send a wake-up signal to the terminal device based on the information about the quantity of receive antennas of the first receiver.

In a possible design, the transceiver unit is further configured to send the first indication information to a core network.

In a possible design, the first indication information indicates the quantity, of receive antennas, supported by the first receiver.

In a possible design, the first indication information indicates that the quantity of receive antennas of the first receiver is the same as a quantity of receive antennas of a second receiver.

In a possible design, the first indication information indicates that the quantity of receive antennas of the first receiver is different from a quantity of receive antennas of the second receiver.

In a possible design, the transceiver unit is further configured to receive second indication information sent by the terminal device, where the second indication information indicates the quantity, of receive antennas, supported by the first receiver.

In a possible design, the first indication information indicates that the quantity, of receive antennas, supported by the first receiver is one of 1, 2, or 4.

In a possible design, the first indication information indicates information about a frequency band supported by the first receiver, and there is an association relationship between the quantity, of receive antennas, supported by the first receiver and the information about the frequency band supported by the first receiver.

In a possible design, the first indication information indicates a quantity, of receive antennas, supported by the second receiver; and the quantity, of receive antennas, supported by the first receiver is the same as the quantity, of receive antennas, supported by the second receiver.

In a possible design, the transceiver unit is further configured to send configuration information to the terminal device, where the configuration information is used by the terminal device to enter a first state or a second state.

In a possible design, the configuration information is a first threshold.

In a possible design, the configuration information is a plurality of candidate thresholds, and there is an association relationship between different candidate thresholds and different quantities, of receive antennas, that may be supported by the first receiver.

In a possible design, the configuration information is one candidate threshold and one or more pieces of offset information; there is an association relationship between the candidate threshold and one quantity, of receive antennas, that may be supported by the first receiver; and there is an association relationship between the different offset information and different quantities, of receive antennas, that may be supported by the first receiver.

According to a fifth aspect, a communication apparatus is provided. The communication apparatus includes a processor. The processor is coupled to at least one memory, and the processor is configured to read a computer program stored in the at least one memory, to perform the method according to any one of the first aspect or the possible designs of the first aspect, or perform the method according to any one of the second aspect or the possible designs of the second aspect.

According to a sixth aspect, a computer-readable storage medium is provided. The computer-readable storage medium is configured to store a computer program; and when the computer program is run on a computer, the computer is enabled to perform the method according to any one of the first aspect or the second aspect or the possible designs of the first aspect or the second aspect.

According to a seventh aspect, a computer program product is provided. When the computer program product is run on a computer, the computer is enabled to perform the method according to any one of the first aspect or the second aspect or the possible designs of the first aspect or the second aspect.

According to an eighth aspect, a chip is provided. The chip includes a processor and a communication interface. The processor is configured to read instructions or a computer program, to perform the method according to any one of the first aspect or the second aspect or the possible designs of the first aspect or the second aspect.

According to a ninth aspect, a communication system is provided. The communication system includes the terminal device according to any one of the third aspect or the possible designs of the third aspect and the network device according to any one of the fourth aspect or the possible designs of the fourth aspect.

For beneficial effect of the third aspect to the ninth aspect and the possible designs of the third aspect to the ninth aspect, refer to the beneficial effect of the first aspect or the second aspect and the possible designs of the first aspect or the second aspect.

### BRIEF DESCRIPTION OF DRAWINGS

FIG. 1 is a diagram of a system architecture scenario to which an embodiment of this application is applicable;
FIG. 2 is a diagram of an example of a receiver of a terminal device according to this application;
FIG. 3 is a diagram of different quantities, of receive antennas, supported by a wake-up receiver;
FIG. 4 is a diagram of an example of a communication method according to an embodiment of this application;
FIG. 5 is a block diagram of a communication device according to an embodiment of this application;
FIG. 6 is a block diagram of another communication device according to an embodiment of this application;
FIG. 7 is a block diagram of a communication apparatus according to an embodiment of this application; and
FIG. 8 is a block diagram of a communication system according to an embodiment of this application.

### DESCRIPTION OF EMBODIMENTS

The following describes technical solutions of this application with reference to accompanying drawings.

The technical solutions in embodiments of this application may be applied to various communication systems, for example, a global system for mobile communications (global system for mobile communications, GSM) system; a code division multiple access (code division multiple access, CDMA) system; a wideband code division multiple access (wideband code division multiple access, WCDMA) system; a general packet radio service (general packet radio service, GPRS) system; a long term evolution (long term evolution, LTE) system; an LTE frequency division duplex (frequency division duplex, FDD) system; an LTE time division duplex (time division duplex, TDD) system; a universal mobile telecommunications system (universal mobile telecommunications system, UMTS); a worldwide interoperability for microwave access (worldwide interoperability for microwave access, WiMAX) communication system; a 5th generation mobile communication technology (5th generation, 5G) system or a new radio (new radio, NR) system; vehicle-to-X (vehicle-to-X, V2X), where V2X may include vehicle-to-network (vehicle-to-network, V2N), vehicle-to-vehicle (vehicle-to-vehicle, V2V), vehicle-to-infrastructure (vehicle-to-infrastructure, V2I), vehicle-to-pedestrian (vehicle-to-pedestrian, V2P), and the like; long term evolution-vehicle (Long Term Evolution-Vehicle, LTE-V); internet of vehicles; machine-type communication (machine-type communication, MTC); IoT; long term evolution-machine (Long Term Evolution-Machine, LTE-M); and machine-to-machine (Machine-to-Machine, M2M).

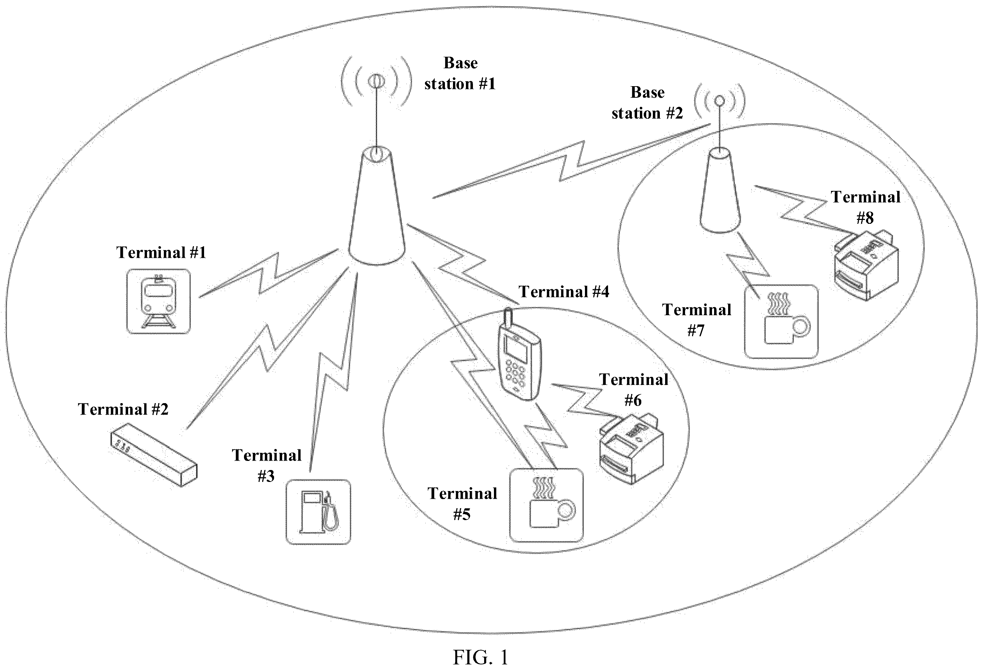

To facilitate understanding of embodiments of this application, a system architecture scenario to which embodiments of this application are applicable is first described in detail with reference to FIG. 1. FIG. 1 is a diagram of a system architecture scenario to which a communication method and an apparatus according to an embodiment of this application are applicable. As shown in FIG. 1, the communication system includes at least one network device (for example, a base station #1 and a base station #2 in FIG. 1) and at least one terminal device (for example, a terminal #1 to a terminal #8 in FIG. 1). In the communication system, the base station #1 sends information to one or more terminal devices in the terminal #1 to the terminal #6. The base station #1 sends information to one or both terminal devices in the terminal #7 and the terminal #8 through the base station #2. In addition, the terminal device # 4 to the terminal device #6 also form a communication system. In the communication system, the terminal device # 4 may send information to one or both terminal devices in the terminal device #5 and the terminal device #6. The base station #2, the terminal #7, and the terminal #8 also form a communication system. In the communication system, the base station #2 may send information to one or both terminal devices in the terminal #7 and the terminal #8. The network device and the terminal device may be at fixed locations, or may be movable. In embodiments of this application, the network device and the terminal device may be deployed on land, including an indoor, outdoor, handheld, or vehicle-mounted device; may be deployed on the water; or may be deployed on an airplane, a balloon, and a satellite in the air. Scenarios in which the network device and the terminal device are located are not limited in embodiments of this application.

It may be understood that FIG. 1 is merely an example, and does not constitute any limitation on the protection scope of this application. The communication method provided in embodiments of this application may further relate to a network element or a device that is not shown in FIG. 1. Certainly, the communication method provided in embodiments of this application may alternatively include only some network elements shown in FIG. 1.

It may be understood that the network architecture used in embodiments of this application is merely an example, and a network architecture to which embodiments of this application are applicable is not limited thereto. Any network architecture that can implement functions of the foregoing network elements is applicable to embodiments of this application.

The following describes some terms in embodiments of this application, to facilitate understanding of a person skilled in the art.

### (1) Terminal device

In embodiments of this application, the terminal device includes a device that provides a voice and/or data connectivity for a user. Specifically, the terminal device includes a device that provides a voice for the user, or includes a device that provides data connectivity for the user, or includes a device that provides a voice and data connectivity for the user. The terminal device may also be referred to as user equipment (user equipment, UE), an access terminal, a subscriber unit, a subscriber station, a mobile station, a mobile console, a remote station, a remote terminal, a mobile device, a user terminal, a terminal (terminal), a wireless communication device, a user agent, or a user apparatus. In embodiments of this application, the terminal device may be a mobile phone (mobile phone), a tablet computer (pad), a computer having a wireless transceiver function, a virtual reality (virtual reality, VR) terminal device, an augmented reality (augmented reality, AR) terminal device, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a vehicle-mounted device, a wearable device, a terminal device in a 5G network, a terminal device in a future evolved public land mobile network (public land mobile network, PLMN), or the like.

The wearable device may also be referred to as a wearable intelligent device, and is a general term of wearable devices, such as glasses, gloves, watches, clothes, and shoes, that are developed by applying wearable technologies to intelligent designs of daily wear. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement complete or partial functions without depending on smartphones, for example, smart watches or smart glasses, and devices that focus on only one type of application function and need to operate with other devices such as smartphones, for example, various smart bands or smart jewelry for monitoring physical signs.

In addition, the terminal device may alternatively be a terminal device in an IoT system. IoT is an important part in future development of information technologies. A main technical feature of the IoT is to connect things to a network by using a communication technology, to implement an intelligent network for human-machine interconnection and thing-thing interconnection.

In embodiments of this application, an apparatus configured to implement a function of the terminal device may be a terminal device; or may be an apparatus that can support the terminal device to implement the function, for example, a chip system or a chip. The apparatus may be installed in the terminal device. In embodiments of this application, the chip system may include a chip, or may include a chip and another discrete component.

A specific form of the terminal device is not limited in this application.

### (2) Network device

In embodiments of this application, the network device may be any device having a wireless transceiver function. The device includes but is not limited to: an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (base band unit, BBU), an access point (access point, AP) in a wireless fidelity (wireless fidelity, Wi-Fi) system, a wireless relay node, a wireless backhaul node, a transmission point (transmission point, TP), a transmission reception point (transmission reception point, TRP), or the like. Alternatively, the device may be a next-generation NodeB (next generation NodeB, gNB) or a transmission point (a TRP or a TP) in a 5G NR system, or may be one antenna panel or a group of antenna panels (including a plurality of antenna panels) of a base station in a 5G system, or may be a network node, for example, a baseband unit (BBU) or a distributed unit (distributed unit, DU), that constitutes a gNB or a transmission point. Alternatively, the network device may be a network device in a future 6th generation mobile communication technology (6th generation, 6G) network, a network device in a future evolved PLMN network, or the like. This is not limited in embodiments of this application. A specific technology and a specific device form that are used by the network device are not limited in embodiments of this application.

In some deployments, the gNB may include a central unit (central unit, CU) and a DU. The gNB may further include an active antenna unit (active antenna unit, AAU). The CU implements some functions of the gNB, and the DU implements some functions of the gNB. For example, the CU is responsible for processing a non-real-time protocol and service, and implementing functions of a radio resource control (radio resource control, RRC) layer and a packet data convergence protocol (packet data convergence protocol, PDCP) layer. The DU is responsible for processing a physical layer protocol and a real-time service, and implementing functions of a radio link control (radio link control, RLC) layer, a medium access control (medium access control, MAC) layer, and a physical (physical, PHY) layer. The AAU implements some physical layer processing functions, radio frequency processing, and a function related to an active antenna. Information at the RRC layer is eventually converted into information at the PHY layer, or is converted from information at the PHY layer. Therefore, in this architecture, higher layer signaling such as RRC layer signaling may also be considered as being sent by the DU or sent by the DU and the AAU. It may be understood that the network device may be a device including one or more of a CU node, a DU node, and an AAU node. In addition, the CU may be classified into a network device in an access network (radio access network, RAN), or the CU may be classified into a network device in a core network (core network, CN). This is not limited in this application.

The network device provides a service for a cell. The terminal device communicates with the cell by using a transmission resource (for example, a frequency domain resource or a spectrum resource) allocated by the network device. The cell may belong to a macro base station (for example, a macro eNB or a macro gNB), or may belong to a base station corresponding to a small cell (small cell). The small cell herein may include a metro cell (metro cell), a micro cell (micro cell), a pico cell (pico cell), a femto cell (femto cell), and the like. These small cells are featured by small coverage and low transmit power, and are applicable to providing a high-rate data transmission service.

### (3) Main receiver (main radio)

Usually, a same receiving module (or a receiver or a receiving circuit) is used for implementation when the terminal device performs a paging receiving procedure in an idle state or an inactive state and when the terminal device receives data in a connected state. In this application, for ease of description, a module that completes these functions (or performs related steps) is referred to as a main receiver. It can be understood that the main receiver is merely a name for distinguishing, and a specific name of the main receiver does not constitute any limitation on the protection scope of this application.

The main receiver is with high power consumption, but has more functions, and can receive and send more types of signals. In a process of communicating with the network device, the main receiver is configured to undertake main data transmission.

In this application, for example, the main receiver may be configured to receive a synchronization signal block (synchronization signal block, SSB), a physical downlink control channel (physical downlink control channel, PDCCH), a physical downlink shared channel (physical downlink shared channel, PDSCH), or a channel state information reference signal (channel state information reference signal, CSI RS), or may be configured to receive a binary phase shift keying (binary phase shift keying, BPSK), quadrature phase shift keying (quadrature phase shift keying, QPSK), 16 quadrature amplitude modulation (quadrature amplitude modulation, QAM), 64QAM, or 256QAM modulation signal, or may be configured to receive a fast Fourier transform (fast Fourier transform, FFT) signal or an inverse fast Fourier transform (inverse fast Fourier transform, IFFT) signal. The main receiver may be a receiver whose local oscillator is with high precision.

A signal received by the terminal device through the main receiver may be referred to as a signal transmitted on a main link. The main link represents a connection relationship between the terminal device and the network device, and is a logical concept rather than a physical entity. It can be understood that the main link is merely a name for distinguishing, and a specific name of the main link does not constitute any limitation on the protection scope of this application.

When the terminal device receives paging through the main receiver, power consumption is high. For example, the terminal device needs to periodically wake up the main receiver once in each discontinuous reception (discontinuous reception, DRX) cycle. When the terminal device does not transmit signaling or a data service, a behavior of waking up the main receiver once in each DRX cycle causes main power consumption of the terminal device. In addition, because the main receiver is complex, reference power consumption (or static power consumption) generated during running of the main receiver is high.

To reduce power consumption caused by receiving paging by the terminal device, in a possible method, the terminal device may receive a wake-up signal through a separate small low-power circuit. The small low-power circuit is capable of monitoring a wake-up signal with ultra-low power consumption. The main receiver may be in an off state or a deep sleep state, and the small low-power circuit may be in an active state or an intermittent active state. After the terminal device detects the wake-up signal through the small low-power circuit, the terminal device may trigger, based on the wake-up signal, wake-up of the main receiver. When the main receiver is on, the main receiver can be configured for data transmission. The small low-power circuit may be implemented through a separate small circuit, module, or chip with a simple structure, and has low power consumption.

### (4) Wake-up receiver (wake-up receiver, WUR)

The small low-power circuit may be referred to as, for example, a wake-up receiver (wake-up receiver, WUR), a low-power wake-up receiver (low-power wake-up receiver), a wake-up radio (wake-up radio, WUR), or an auxiliary receiver, or may be referred to as a wake-up circuit, a low-power circuit, or the like. A name of the small low-power circuit is not limited in this application. For ease of description, these names are uniformly described as a wake-up receiver below.

In this application, for example, the wake-up receiver may be configured to receive a signal obtained through on-off keying (on-off keying, OOK) modulation or frequency shift keying (frequency shift keying, FSK) modulation, or may be configured to receive a signal on which FFT or IFFT does not need to be performed in a generation or decoding process, or may be configured to receive a signal obtained through Manchester encoding.

A signal received by the terminal device through the wake-up receiver may be referred to as a signal transmitted on a wake-up link. The wake-up link represents a connection relationship between the terminal device and the network device, and is a logical concept rather than a physical entity. It can be understood that the wake-up link is merely a name for distinguishing, and a specific name of the wake-up link does not constitute any limitation on the protection scope of this application. For example, the wake-up link may also be referred to as a WUR link.

In this application, energy consumption of the wake-up receiver is lower than that of the main receiver. For example, lower energy consumption of the wake-up receiver may be represented as at least one of the following aspects: Energy consumption that is of the wake-up receiver and that is used for receiving a signal transmitted on the wake-up link is lower than energy consumption that is of the main receiver and that is used for receiving a signal transmitted on the main link; energy consumption of the wake-up receiver is lower than that of the main receiver; the wake-up receiver is a receiver whose local oscillator is with low precision; the wake-up receiver is a receiver that uses envelope detection; and the wake-up receiver is a receiver that does not need to perform FFT or IFFT on a signal. A key to energy saving of the wake-up receiver is that a receiver structure that does not use a high-precision crystal oscillator (0.1 ppm) or uses a low-precision oscillator (for example, a ring oscillator) is used. In this receiver architecture, down-conversion needs to be implemented in an envelope detection manner. Envelope detection is a non-coherent receiving manner. In comparison with a coherent receiving manner of the main receiver, coverage performance of envelope detection is greatly different.

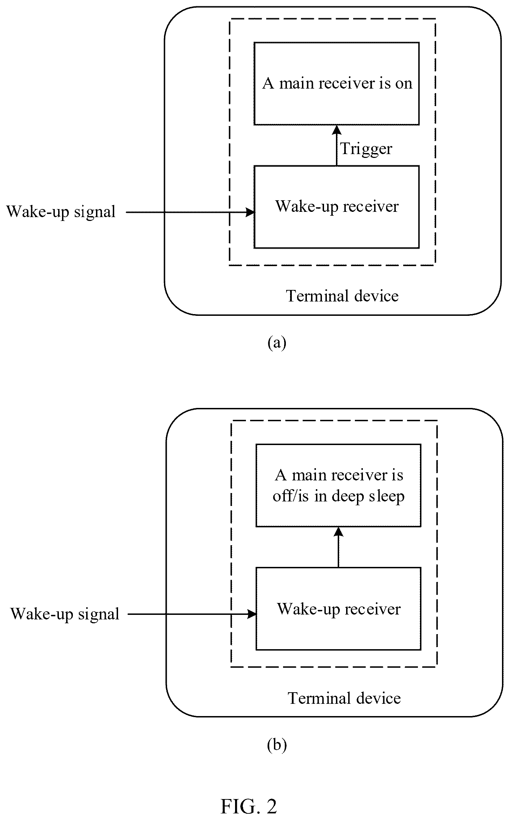

FIG. 2 is a diagram of an example of a receiver of a terminal device according to this application. A wake-up receiver may be configured to receive a wake-up signal, and the wake-up receiver may determine, based on whether the wake-up signal includes an identifier of the terminal device, whether to trigger wake-up of a main receiver. For example, if the wake-up signal includes the identifier of the terminal device, the main receiver is triggered to wake up (be on), as shown in (a) in FIG. 2; or if the wake-up signal does not include the identifier of the terminal device, the main receiver is in an off state or a deep sleep state, as shown in (b) in FIG. 2.

The wake-up receiver reuses some radio frequency hardware of the main receiver, for example, a receive antenna of the main receiver, so that costs can be reduced.

### (5) Wake-up signal

A signal received through the wake-up receiver may be referred to as a "wake-up signal", a "signal transmitted on a wake-up link", a "WUR signal", or the like. A name of the signal received through the wake-up receiver is not limited in this application. For ease of description, these names are uniformly described as a wake-up signal below.

The wake-up signal may indicate whether one terminal device or a group of terminal devices are paged. For example, if the wake-up signal includes an identifier (UE ID) of a specific terminal device, it indicates that the terminal device is paged. On the contrary, if the wake-up signal does not include an identifier of the terminal device, it indicates that the terminal device is not paged. The UE ID is, for example, a 5G-S-TMSI, or the UE ID may include some bits in the 5G-S-TMSI. For example, the UE ID may include high bits in the 5G-TMSI.

After receiving the wake-up signal, the terminal device may operate in two possible manners. In a 1^{st} manner, after receiving the wake-up signal, the terminal device may wake up the main receiver based on the wake-up signal, receive paging (paging) through the main receiver, and then initiate random access. In a 2^{nd} manner, after receiving the wake-up signal, the terminal device may wake up the main receiver based on the wake-up signal and directly initiate random access.

In this application, the wake-up signal may be a signal obtained through on-off keying (on-off keying, OOK) modulation or frequency shift keying (frequency shift keying, FSK) modulation, or may be a signal on which fast Fourier transform (fast Fourier transform, FFT) or inverse fast Fourier transform (inverse fast Fourier transform, IFFT) does not need to be performed in a generation or decoding process, or may be a signal obtained through Manchester encoding. When OOK modulation is used, each bit (where the bit may be an encoded bit) corresponds to one symbol (which may also be referred to as one chip (chip)). In a possible case, when a bit is 1, it indicates that a signal is sent in symbol duration (that is, signal power in the symbol duration is not 0); or when a bit is 0, it indicates that no signal is sent in symbol duration (that is, signal power in the symbol duration is 0). In another case, when a bit is 0, it indicates that a signal is sent in symbol duration (that is, signal power in the symbol duration is not 0); or when a bit is 1, it indicates that no signal is sent in symbol duration (that is, signal power in the symbol duration is 0).

In addition to the wake-up signal, the signal transmitted by the network device on the wake-up link may further include a synchronization signal. The synchronization signal may be used for time synchronization of the wake-up link, and may be further used by the terminal device to detect quality of the wake-up link.

### (6) Quantity of receive antennas

The quantity of receive antennas may also be expressed as "a quantity of receive branches (Rx branches)", "a quantity of multiple-input multiple-output layers (MIMO layers)", or the like. A name of the quantity of receive antennas is not limited in this application. For ease of description, these names are uniformly described as a quantity of receive antennas below.

The foregoing briefly describes the terms in this application, and details are not described in the following embodiments again.

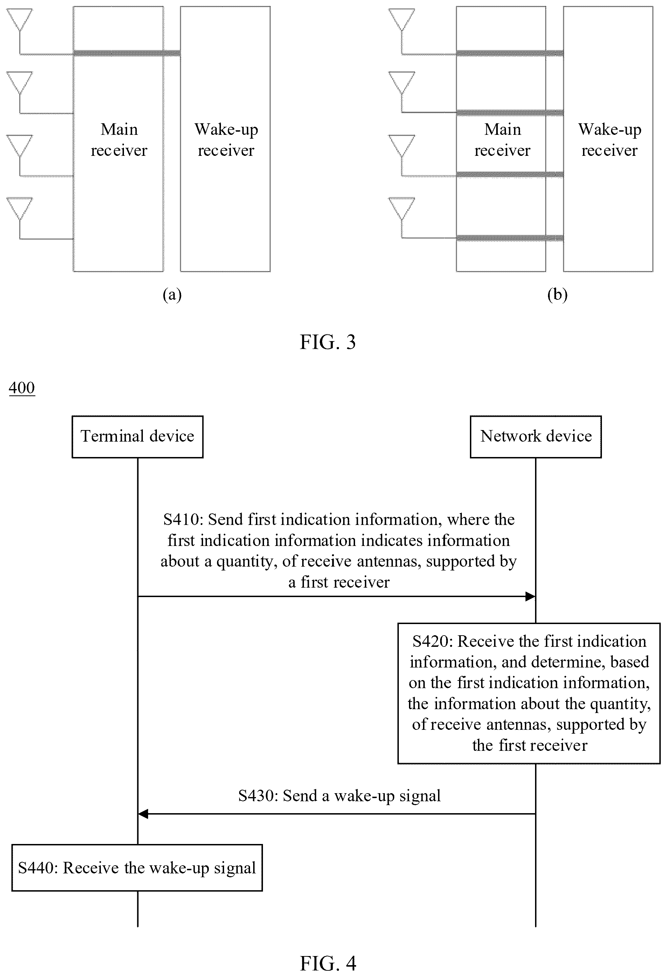

As described above, power consumption of the wake-up receiver is lower, and the wake-up receiver reuses all or some radio frequency hardware of the main receiver, so that costs can be reduced. However, in comparison with that in a coherent receiving manner of the main receiver, coverage performance of a coherent receiving manner of the wake-up receiver is greatly different. In addition, a quantity, of receive antennas, supported by the wake-up receiver also affects receiving performance and a coverage capability of the wake-up receiver. FIG. 3 is a diagram of different quantities, of receive antennas, supported by a wake-up receiver. A small quantity of receive antennas and a large energy saving gain are applicable to a scenario with a high power consumption requirement. A large quantity of receive antennas can resist deep fading and obtain a spatial-domain receive diversity gain, and are applicable to a scenario with a high coverage requirement in a case in which specific energy saving effect is ensured. The main receiver and the wake-up receiver differ in receiving performance and coverage capabilities. This affects a transmission parameter used when the network device schedules transmission, and reduces system transmission efficiency. In addition, a coverage hole of the wake-up receiver may occur when the terminal device that enables the wake-up receiver moves between a plurality of cells.

In view of this, this application provides a communication method and an apparatus, so that transmission efficiency can be improved, and a coverage hole problem can be resolved. The following describes in detail the communication method provided in embodiments of this application with reference to the accompanying drawings. The communication method provided in embodiments of this application may be applied to the communication system shown in FIG. 1.

FIG. 4 is a diagram of an example of a communication method according to an embodiment of this application. The method 400 may include S410 to S440. It should be understood that FIG. 4 shows steps or operations of the communication method. However, these steps or operations are merely examples. In this embodiment of this application, other operations or variations of the operations in FIG. 4 may be further performed, or appropriate switching between steps may be performed.

S410: A terminal device sends first indication information, where the first indication information indicates information about a quantity, of receive antennas, supported by a first receiver.

Specifically, the first receiver may be a wake-up receiver of the terminal device, or may be a main receiver of the terminal device.

In a possible design, the terminal may select, based on one or more of a coverage requirement, an energy consumption requirement, and a mobility requirement of the terminal, a quantity, of receive antennas, supported by the wake-up receiver in a quantity, of receive antennas, supported by the main receiver, and send, to a network device by using the first indication information, the quantity, of receive antennas, supported by the wake-up receiver. Specifically, the coverage requirement may be determined based on a service condition or a coverage-related parameter.

For example, if the terminal device determines, through measurement, that reference signal received power (reference signal received power, RSRP) is good and a measurement relaxation condition is met, the terminal device may report that the quantity, of receive antennas, supported by the wake-up receiver is 1; or if the terminal device determines, through measurement, that RSRP is poor or a measurement relaxation condition is not met, the terminal device may report that the quantity, of receive antennas, supported by the wake-up receiver is 2 or 4.

According to the foregoing example, if the first receiver is the main receiver of the terminal device, correspondingly, the first indication information indicating the information about the quantity, of receive antennas, supported by the first receiver may indicate the quantity, of receive antennas, supported by the main receiver of the terminal. The first indication information may further simultaneously indicate the quantity, of receive antennas, supported by the wake-up receiver of the terminal.

Similarly, if the first receiver is the wake-up receiver of the terminal device, correspondingly, the first indication information indicating the information about the quantity, of receive antennas, supported by the first receiver may indicate the quantity, of receive antennas, supported by the wake-up receiver of the terminal.

Optionally, the first indication information indicates the quantity, of receive antennas, supported by the first receiver. The quantity of antennas herein may be a specific quantity of receive antennas.

For example, if the terminal device determines that the quantity, of receive antennas, supported by the first receiver is 4, the first indication information indicates 4; or if the terminal device determines that the quantity, of receive antennas, supported by the first receiver is 2, the first indication information indicates 2. For example, a specific quantity of receive antennas may be indicated by using 2-bit information. For example, 00 may indicate that the quantity, of receive antennas, supported by the first receiver is 1, 01 may indicate that the quantity, of receive antennas, supported by the first receiver is 2, or 10 may indicate that the quantity, of receive antennas, supported by the first receiver is 4.

In addition to the indication manner in the foregoing example, the quantity, of receive antennas, supported by the first receiver may be indicated in another manner. The following describes two cases. The quantity of antennas of the first receiver may be indicated in a manner of indicating a relationship between quantities of receive antennas of two receivers.

Case 1: The first indication information indicates that the quantity of receive antennas of the first receiver is the same as a quantity of receive antennas of a second receiver.

With reference to the foregoing example, an indication manner in which the first indication information indicates that the quantity of receive antennas of the first receiver is the same as the quantity of receive antennas of the second receiver is specifically described. For example, the first receiver is the wake-up receiver of the terminal device, and the second receiver is the main receiver of the terminal device. In this case, before performing step 410, the terminal device may pre-notify of the quantity of receive antennas of the second receiver. In step 410, the first indication information directly indicates that the quantity of receive antennas of the first receiver is the same as the quantity of receive antennas of the second receiver, and a base station determines the quantity of receive antennas of the first receiver based on the pre-learned quantity of receive antennas of the second receiver and the first indication information. It should be understood that the pre-notification may alternatively be performed after step 410. In addition, the base station may alternatively learn of the quantity of receive antennas of the second receiver in another manner. In this case, the terminal device may not notify the base station of the quantity of receive antennas of the second receiver, to further reduce signaling overheads. For a manner of notifying of the quantity of receive antennas of the second receiver, refer to the foregoing embodiment. Details are not described herein again.

Case 2: The first indication information indicates that the quantity of receive antennas of the first receiver is different from a quantity of receive antennas of a second receiver.

In this case, in a possible implementation, the terminal device sends second indication information to the network device, where the second indication information indicates the quantity, of receive antennas, supported by the first receiver. In step 410, the first indication information indicates that the quantity of receive antennas of the first receiver is different from the quantity of receive antennas of the second receiver, and a base station determines the quantity of receive antennas of the first receiver based on the first indication information and the second indication information. It should be understood that the terminal device may alternatively send the second indication information to the network device before sending the first indication information. Specifically, for a manner of determining the quantity, of receive antennas, indicated by the second indication information, refer to a related embodiment of indicating the quantity of receive antennas of the first receiver. Details are not described herein again.

In another possible implementation, in step 410, the first indication information indicates that the quantity of receive antennas of the first receiver is different from the quantity of receive antennas of the second receiver, and the base station may determine the quantity of receive antennas of the first receiver based on the first indication information and according to a preset rule.

In an implementation, before performing step 410, the terminal device may pre-notify of the quantity of receive antennas of the second receiver. For example, if the terminal device notifies that the quantity of receive antennas of the second receiver is 4, a quantity, of antennas, that may be supported by the first receiver is one of {1, 2, 3, 4}. For example, if the preset rule is "if the quantity of receive antennas of the first receiver is different from the quantity of receive antennas of the second receiver, the quantity of receive antennas of the first receiver is a half of the quantity of receive antennas of the second receiver", in step 410, the first indication information indicates that the quantity of receive antennas of the first receiver is different from the quantity of receive antennas of the second receiver, and the base station determines, based on the pre-learned quantity of receive antennas of the second receiver and the first indication information and according to the preset rule, that the quantity of receive antennas of the first receiver is 2. For example, if the preset rule is "if the quantity of receive antennas of the first receiver is different from the quantity of receive antennas of the second receiver, the quantity of receive antennas of the first receiver is a maximum quantity, of receive antennas, that can be supported and that is less than the quantity of receive antennas of the second receiver", in step 410, the first indication information indicates that the quantity of receive antennas of the first receiver is different from the quantity of receive antennas of the second receiver, and the base station determines, based on the pre-learned quantity of receive antennas of the second receiver and the first indication information and according to the preset rule, that the quantity of receive antennas of the first receiver is 3. It should be understood that the pre-notification may alternatively be performed after step 410. In addition, the base station may alternatively learn of the quantity of receive antennas of the second receiver in another manner. In this case, the terminal device may not notify the base station of the quantity of receive antennas of the second receiver, to further reduce signaling overheads. For a manner of notifying of the quantity of receive antennas of the second receiver, refer to the foregoing embodiment. Details are not described herein again.

In another implementation, when it is preset that the quantity of receive antennas of the first receiver is different from the quantity of receive antennas of the second receiver, the quantity of receive antennas of the first receiver is a specific value. For example, if the preset rule is "if the quantity of receive antennas of the first receiver is different from the quantity of receive antennas of the second receiver, the quantity of receive antennas of the first receiver is 2", in step 410, the first indication information indicates that the quantity of receive antennas of the first receiver is different from the quantity of receive antennas of the second receiver, and the base station determines, based on the first indication information and according to the preset rule, that the quantity of receive antennas of the first receiver is 2.

With reference to Case 1 and Case 2, the first indication information may indicate, by using one bit, whether the quantity of receive antennas of the first receiver is the same as the quantity of receive antennas of the second receiver. If the quantity of receive antennas of the first receiver is the same as the quantity of receive antennas of the second receiver, the implementation of Case 1 may be directly performed, and in this case, the terminal may not send the second indication information; or if the quantity of receive antennas of the first receiver is different from the quantity of receive antennas of the second receiver, the implementation of Case 2 is performed, or the quantity of receive antennas of the first receiver is directly indicated. In this design, signaling overheads for reporting performed by the terminal device can be reduced. Specifically, when the quantity of receive antennas of the first receiver is the same as the quantity of receive antennas of the second receiver, the terminal may not report the second indication information, and report, by using only one bit, the quantity, of receive antennas, supported by the first receiver.

Optionally, the second indication information indicates that the quantity, of receive antennas, supported by the first receiver is one of 1, 2, or 4.

Optionally, the first indication information indicates that the quantity, of receive antennas, supported by the first receiver is one of 1, 2, or 4.

For example, the terminal device indicates the following several state values by using the first indication information or the second indication information: the quantity, of receive antennas, supported by the wake-up receiver is the same as the quantity, of receive antennas, supported by the main receiver, the quantity, of receive antennas, supported by the wake-up receiver is 1, the quantity, of receive antennas, supported by the wake-up receiver is 2, or the quantity, of receive antennas, supported by the wake-up receiver is 4. In this case, the first indication information or the second indication information may indicate a specific quantity of receive antennas by using 2-bit information. For example, 00 may indicate that the quantity, of receive antennas, supported by the first receiver is 1, 01 may indicate that the quantity, of receive antennas, supported by the first receiver is 2, or 10 may indicate that the quantity, of receive antennas, supported by the first receiver is 4.

Optionally, the first indication information indicates information about a frequency band supported by the first receiver, and there is an association relationship between the quantity, of receive antennas, supported by the first receiver and the information about the frequency band supported by the first receiver.

For example, the terminal device indicates, by using the first indication information, the information about the frequency band supported by the wake-up receiver; and may notify, based on the association relationship between the information about the frequency band and the quantity, of receive antennas, supported by the wake-up receiver, the network device of the quantity, of receive antennas, supported by the wake-up receiver of the terminal device. For example, if it is agreed that the wake-up receiver operates on some frequency bands, a minimum value of the quantity, of receive antennas, supported by the wake-up receiver is 2; or if it is agreed that the wake-up receiver operates on some other frequency bands, a minimum quantity, of receive antennas, supported by the wake-up receiver is 4.

For an association relationship between the quantity, of receive antennas, supported by the first receiver and the information about the frequency band supported by the first receiver, by way of an example rather than limitations, when the frequency band supported by the first receiver is at least one frequency band of n7, n38, n41, n48, n77, n78, and n79 in an NR operating frequency band, a maximum quantity, of receive antennas, supported by the first receiver is 4; or when the frequency band supported by the first receiver is at least one frequency band except n7, n38, n41, n48, n77, n78, and n79 in the NR operating frequency band, the maximum quantity, of receive antennas, supported by the first receiver is 2. It should be understood that operating frequency bands of different frequency bands may also correspond to a minimum value of the quantity, of receive antennas, supported by the first receiver. Optionally, the first indication information indicates the quantity, of receive antennas, supported by the second receiver, and the quantity, of receive antennas, supported by the first receiver is the same as the quantity, of receive antennas, supported by the second receiver.

For example, the terminal device indicates, by using the first indication information, the quantity, of receive antennas, supported by the main receiver of the terminal device, and the base station determines the quantity of receive antennas of the wake-up receiver based on the first indication information and the fact that the quantity of receive antennas of the wake-up receiver of the terminal device is the same as the quantity of receive antennas of the main receiver of the terminal device. For example, if the terminal device indicates, by using the indication information, that the quantity of receive antennas of the main receiver is 2, the base station determines that the quantity, of receive antennas, supported by the wake-up receiver is also 2.

Optionally, the first indication information may be carried in uplink transmission in a random access procedure, or may be carried in uplink transmission in a connected state.

For example, the indication information may be carried in a Msg 3, or the indication information may be carried in an information element UERadioPagingInformation, or the indication information may be carried in an information element UERadioAccessCapabilityInformation, or the indication information may be carried in an information element UEAssistanceInformation.

Optionally, when the terminal device reports the first indication information, an RRC state of the terminal device may be an idle state, an inactive state, or a connected state.

S420: The network device receives the first indication information, and determines, based on the first indication information, the information about the quantity, of receive antennas, supported by the first receiver.

Specifically, the first receiver may be the wake-up receiver of the terminal device, or may be the main receiver of the terminal device. For a manner of determining the quantity, of receive antennas, indicated by the first indication information, refer to the foregoing embodiment. Details are not described herein again.

According to the foregoing example, if the first receiver is the main receiver of the terminal device, correspondingly, the first indication information indicating the information about the quantity, of receive antennas, supported by the first receiver may indicate the quantity, of receive antennas, supported by the main receiver of the terminal. The first indication information may further simultaneously indicate the quantity, of receive antennas, supported by the wake-up receiver of the terminal.

Similarly, if the first receiver is the wake-up receiver of the terminal device, correspondingly, the first indication information indicating the information about the quantity, of receive antennas, supported by the first receiver may indicate the quantity, of receive antennas, supported by the wake-up receiver of the terminal.

Optionally, the network device forwards, to a core network, the first indication information sent by the terminal device. For example, for an NR system, a core network element may be an access and mobility management function (AMF, access and mobility management function) or another network element, for example, may be a mobility management entity (mobility management entity, MME) in an LTE network, a network element having a mobility management function in a future communication technology, or the like.

In this case, when subsequently sending a paging message or wake-up data to the network device, the core network may carry the first indication information.

Optionally, the first indication information indicates the quantity, of receive antennas, supported by the first receiver. The quantity of antennas herein may be a specific quantity of receive antennas.

For example, if the first indication information indicates 4, the network device determines that the quantity, of receive antennas, supported by the first receiver of the terminal device is 4; or if the first indication information indicates 2, the terminal device determines that the quantity, of receive antennas, supported by the first receiver is 2. For example, a specific quantity of receive antennas may be indicated by using 2-bit information. For example, 00 may indicate that the quantity, of receive antennas, supported by the first receiver is 1, 01 may indicate that the quantity, of receive antennas, supported by the first receiver is 2, or 10 may indicate that the quantity, of receive antennas, supported by the first receiver is 4.

In addition to the indication manner in the foregoing example, the quantity, of receive antennas, supported by the first receiver may be indicated in another manner. The following describes two cases. The quantity of antennas of the first receiver may be indicated in a manner of indicating a relationship between quantities of receive antennas of two receivers.

Case 1: The first indication information indicates that the quantity of receive antennas of the first receiver is the same as a quantity of receive antennas of a second receiver.

With reference to the foregoing example, an indication manner in which the first indication information indicates that the quantity of receive antennas of the first receiver is the same as the quantity of receive antennas of the second receiver is specifically described. For example, the first receiver is the wake-up receiver of the terminal device, and the second receiver is the main receiver of the terminal device. In this case, before performing step 410, the network device may pre-learn of the quantity of receive antennas of the second receiver. In step 410, the first indication information is directly used to determine that the quantity of receive antennas of the first receiver is the same as the quantity of receive antennas of the second receiver, and a base station determines the quantity of receive antennas of the first receiver based on the pre-learned quantity of receive antennas of the second receiver and the first indication information. It should be understood that the pre-notification may alternatively be performed after step 410. In addition, the base station may learn of the quantity of receive antennas of the second receiver by using the notification of the terminal device, or may learn of the quantity of receive antennas of the second receiver in another manner. In this case, the terminal device may not notify the base station of the quantity of receive antennas of the second receiver. For a manner of notifying of the quantity of receive antennas of the second receiver, refer to the foregoing embodiment. Details are not described herein again.

Case 2: The first indication information indicates that the quantity of receive antennas of the first receiver is different from a quantity of receive antennas of a second receiver.

In this case, in a possible implementation, the network device receives second indication information sent by the terminal device, where the second indication information indicates the quantity, of receive antennas, supported by the first receiver. In step 410, the first indication information indicates that the quantity of receive antennas of the first receiver is different from the quantity of receive antennas of the second receiver, and a base station determines the quantity of receive antennas of the first receiver based on the first indication information and the second indication information. It should be understood that the terminal device may alternatively send the second indication information to the network device before sending the first indication information. Specifically, for a manner of determining the quantity, of receive antennas, indicated by the second indication information, refer to the foregoing embodiment. Details are not described herein again.

In another possible implementation, in step 410, the first indication information indicates that the quantity of receive antennas of the first receiver is different from the quantity of receive antennas of the second receiver, and the base station determines the quantity of receive antennas of the first receiver based on the first indication information and according to a preset rule.

In an implementation, before performing step 410, the terminal device may pre-notify of the quantity of receive antennas of the second receiver. For example, if the terminal device notifies that the quantity of receive antennas of the second receiver is 4, a quantity, of antennas, that may be supported by the first receiver is one of {1, 2, 3, 4}. For example, if the preset rule is "if the quantity of receive antennas of the first receiver is different from the quantity of receive antennas of the second receiver, the quantity of receive antennas of the first receiver is a half of the quantity of receive antennas of the second receiver", in step 410, the first indication information indicates that the quantity of receive antennas of the first receiver is different from the quantity of receive antennas of the second receiver, and the base station determines, based on the pre-learned quantity of receive antennas of the second receiver and the first indication information and according to the preset rule, that the quantity of receive antennas of the first receiver is 2. For example, if the preset rule is "if the quantity of receive antennas of the first receiver is different from the quantity of receive antennas of the second receiver, the quantity of receive antennas of the first receiver is a maximum quantity, of receive antennas, that can be supported and that is less than the quantity of receive antennas of the second receiver", in step 410, the first indication information indicates that the quantity of receive antennas of the first receiver is different from the quantity of receive antennas of the second receiver, and the base station determines, based on the pre-learned quantity of receive antennas of the second receiver and the first indication information and according to the preset rule, that the quantity of receive antennas of the first receiver is 3. It should be understood that the pre-notification may alternatively be performed after step 410. In addition, the base station may alternatively learn of the quantity of receive antennas of the second receiver in another manner. In this case, the terminal device may not notify the base station of the quantity of receive antennas of the second receiver. For a manner of notifying of the quantity of receive antennas of the second receiver, refer to the foregoing embodiment. Details are not described herein again.

In another implementation, when it is preset that the quantity of receive antennas of the first receiver is different from the quantity of receive antennas of the second receiver, the quantity of receive antennas of the first receiver is a specific value. For example, if the preset rule is "if the quantity of receive antennas of the first receiver is different from the quantity of receive antennas of the second receiver, the quantity of receive antennas of the first receiver is 2", in step 410, the first indication information indicates that the quantity of receive antennas of the first receiver is different from the quantity of receive antennas of the second receiver, and the base station determines, based on the first indication information and according to the preset rule, that the quantity of receive antennas of the first receiver is 2.

With reference to Case 1 and Case 2, the first indication information may indicate, by using one bit, whether the quantity of receive antennas of the first receiver is the same as the quantity of receive antennas of the second receiver. If the quantity of receive antennas of the first receiver is the same as the quantity of receive antennas of the second receiver, the implementation of Case 1 may be directly performed, and in this case, the terminal may not send the second indication information; or if the quantity of receive antennas of the first receiver is different from the quantity of receive antennas of the second receiver, the implementation of Case 2 is performed, or the quantity of receive antennas of the first receiver is directly indicated. In this design, signaling overheads for reporting performed by the terminal device can be reduced. Specifically, when the quantity of receive antennas of the first receiver is the same as the quantity of receive antennas of the second receiver, the terminal may not report the second indication information, and report, by using only one bit, the quantity, of receive antennas, supported by the first receiver.

Optionally, the second indication information indicates that the quantity, of receive antennas, supported by the first receiver is one of 1, 2, or 4.

Optionally, the first indication information indicates that the quantity, of receive antennas, supported by the first receiver is one of 1, 2, or 4.

For example, the network device determines the following several state values by using the received first indication information: the quantity, of receive antennas, supported by the wake-up receiver is the same as the quantity, of receive antennas, supported by the main receiver, the quantity, of receive antennas, supported by the wake-up receiver is 1, the quantity, of receive antennas, supported by the wake-up receiver is 2, or the quantity, of receive antennas, supported by the wake-up receiver is 4. In this case, the first indication information or the second indication information may indicate a specific quantity of receive antennas by using 2-bit information. For example, 00 may indicate that the quantity, of receive antennas, supported by the first receiver is 1, 01 may indicate that the quantity, of receive antennas, supported by the first receiver is 2, or 10 may indicate that the quantity, of receive antennas, supported by the first receiver is 4.

Optionally, the first indication information indicates information about a frequency band supported by the first receiver, and there is an association relationship between the quantity, of receive antennas, supported by the first receiver and the information about the frequency band supported by the first receiver.

For example, the network device determines, by using the received first indication information, the information about the frequency band supported by the wake-up receiver; and may determine, based on the association relationship between the information about the frequency band and the quantity, of receive antennas, supported by the wake-up receiver, the quantity, of receive antennas, supported by the wake-up receiver of the terminal device. For example, if it is agreed that the wake-up receiver operates on some frequency bands, a minimum value of the quantity, of receive antennas, supported by the wake-up receiver is 2; or if it is agreed that the wake-up receiver operates on some other frequency bands, a minimum quantity, of receive antennas, supported by the wake-up receiver is 4.

For an association relationship between the quantity, of receive antennas, supported by the first receiver and the information about the frequency band supported by the first receiver, by way of an example rather than limitations, when the frequency band supported by the first receiver is at least one frequency band of n7, n38, n41, n48, n77, n78, and n79 in an NR operating frequency band, a maximum quantity, of receive antennas, supported by the first receiver is 4; or when the frequency band supported by the first receiver is at least one frequency band except n7, n38, n41, n48, n77, n78, and n79 in the NR operating frequency band, the maximum quantity, of receive antennas, supported by the first receiver is 2. Optionally, the first indication information indicates the quantity, of receive antennas, supported by the second receiver, and the quantity, of receive antennas, supported by the first receiver is the same as the quantity, of receive antennas, supported by the second receiver.

Optionally, the first indication information indicates the quantity, of receive antennas, supported by the second receiver, and the quantity, of receive antennas, supported by the first receiver is the same as the quantity, of receive antennas, supported by the second receiver.

For example, the network device determines, by using the first indication information, the quantity, of receive antennas, supported by the main receiver of the terminal device, and the base station determines the quantity of receive antennas of the wake-up receiver based on the first indication information and the fact that the quantity of receive antennas of the wake-up receiver of the terminal device is the same as the quantity of receive antennas of the main receiver of the terminal device. For example, if the network device determines, by using the first indication information, that the quantity of receive antennas of the main receiver is 2, the base station determines that the quantity, of receive antennas, supported by the wake-up receiver is also 2.

Optionally, the first indication information may be carried in uplink transmission in a random access procedure, or may be carried in uplink transmission in a connected state.

For example, the indication information may be carried in a Msg 3, or the indication information may be carried in an information element UERadioPagingInformation, or the indication information may be carried in an information element UERadioAccessCapabilityInformation, or the indication information may be carried in an information element UEAssistanceInformation.

Optionally, when the network device receives the first indication information, an RRC state of the terminal device may be an idle state, an inactive state, or a connected state.

S430: The network device sends a wake-up signal to the terminal device based on the first indication information.

In this case, the network device may adaptively adjust a transmission parameter, for example, a bit rate, a quantity of repetitions, a bandwidth, and a transport block size, of the wake-up data based on the quantity, of receive antennas, supported by the wake-up receiver of the terminal device.

S440: The terminal device receives, through the first receiver, the wake-up signal sent by the network device.

S450: The network device sends configuration information, where the configuration information is used by the terminal device to enter a first state or a second state.

It may be understood that step S450 is optional, and is not shown in FIG. 4.

It may be understood that the network device may send the configuration information by using RRC signaling, or may send the configuration information by using a MAC control element (MAC control element, MAC CE), or may send the configuration information by using downlink control information (downlink control information, DCI). This is not limited in this application.

Specifically, in the first state, the terminal device communicates with the network device through the main receiver; or in the second state, the terminal device receives, through the wake-up receiver, the wake-up signal sent by the network device. Optionally, the first state and the second state may correspond to different RRC states. For example, the second state may be a new RRC state other than RRC_IDLE, RRC_INACTIVE, and RRC_CONNECTED. Optionally, the first state and the second state may correspond to different power states. For example, power consumption of the terminal device in the second state is lower than power consumption of the terminal device in the first state. It may be understood that the entering in step S450 may be that the terminal device enters the first state or the second state based on the configuration information, or may be that the terminal device switches between the first state and the second state. A specific switching operation is not limited in this application. It may be understood that the terminal device is already in the first state or the second state before receiving the configuration information, and the configuration information in this application is used to change the state that the terminal device is in.

For the configuration information, the following describes several configuration manners. For ease of understanding, the following uses an example in which the first receiver is a wake-up receiver for description.

Manner 1: The configuration information is a first threshold.

Specifically, the first threshold configured by the network device may be an RSRP threshold, and the RSRP threshold may be set for the fact that the quantity, of receive antennas, supported by the wake-up receiver is 1.

Manner 2: The configuration information is a plurality of candidate thresholds, and there is an association relationship between different candidate thresholds and different quantities, of receive antennas, that may be supported by the wake-up receiver.

Specifically, the network device configures a plurality of RSRP thresholds, and different RSRP thresholds correspond to different quantities, of receive antennas, supported by the wake-up receiver. For example, Table 2 shows a correspondence between the RSRP threshold configured by the network and the quantity, of receive antennas, supported by the wake-up receiver.

**Table 2 Example of the RSRP threshold configured by the network**

| Quantity, of receive antennas, supported by the wake-up receiver | RSRP threshold (dBm) |
|---|---|
| 1 | -80 |
| 2 | -83 |
| 4 | -86 |

Manner 3: The configuration information is one candidate threshold and one or more pieces of offset information; there is an association relationship between the candidate threshold and one quantity, of receive antennas, that may be supported by the wake-up receiver; and there is an association relationship between different offset information and different quantities, of receive antennas, that may be supported by the wake-up receiver. In this manner, signaling overheads can be further optimized.

Specifically, one candidate threshold configured by the network device may be an RSRP threshold, and the RSRP threshold may be set for the fact that the quantity, of receive antennas, supported by the wake-up receiver is 1. For another quantity, of receive antennas, supported by the wake-up receiver, the network configures a plurality of pieces of offset information, and different offset information corresponds to different quantities, of receive antennas, supported by the wake-up receiver. In this case, for another quantity (for example, 2 or 4), of receive antennas, supported by the wake-up receiver, a corresponding RSRP threshold may be determined based on the candidate threshold and the offset information that are configured. For example, Table 3 shows a correspondence between the candidate RSRP threshold and the offset information that are configured by the network and the quantity, of receive antennas, supported by the wake-up receiver.

**Table 3 Example of the RSRP threshold and the offset information that are configured in the network**

| Quantity, of receive antennas, supported by the wake-up receiver | RSRP threshold (dBm) | Offset information (dBm) |
|---|---|---|
| 1 | -80 | / |
| 2 | / | -3 |
| 4 | / | -6 |

S460: The terminal device receives the configuration information; and the terminal device in the first state enters the second state based on the configuration information.

It may be understood that step S460 is optional, and is not shown in FIG. 4.

It may be understood that the terminal device may determine the configuration information by receiving the RRC signaling, or may determine the configuration information by receiving the MAC CE, or may determine the configuration information by receiving the DCI. This is not limited in this application.

Specifically, in the first state, the terminal device communicates with the network device through the main receiver; or in the second state, the terminal device receives, through the wake-up receiver, the wake-up signal sent by the network device. It may be understood that the terminal device may enter the second state from the first state based on the configuration information, or may enter the first state from the second state based on the configuration information. For specific content of the first state and the second state, refer to related descriptions in the foregoing embodiment.

For the configuration information, the following describes several configuration manners. For ease of understanding, the following uses an example in which the first receiver is a wake-up receiver for description.

Manner 1: The configuration information is a first threshold.

Specifically, the configuration information received by the terminal device is the first threshold, the threshold may be an RSRP threshold, and the RSRP threshold may be set for the fact that the quantity, of receive antennas, supported by the wake-up receiver is 1.

Manner 2: The configuration information is a plurality of candidate thresholds, and there is an association relationship between different candidate thresholds and different quantities, of receive antennas, that may be supported by the wake-up receiver; and the terminal device determines the first threshold from the plurality of candidate thresholds based on the quantity, of receive antennas, supported by the wake-up receiver.

Specifically, the configuration information received by the terminal device is a plurality of RSRP thresholds, and different RSRP thresholds correspond to different quantities, of receive antennas, supported by the wake-up receiver. The terminal device determines one RSRP threshold based on the quantity, of receive antennas, supported by the wake-up receiver of the terminal device, and the RSRP threshold is the first threshold. For example, Table 2 shows a correspondence between the RSRP threshold configured by the network and the quantity, of receive antennas, supported by the wake-up receiver. As shown in Table 2, the terminal device receives the configuration information sent by the network device. If the quantity, of receive antennas, supported by the wake-up receiver of the terminal device is 1, the terminal device determines that the first threshold is -80 dBm; or if the quantity, of receive antennas, supported by the wake-up receiver of the terminal device is 2, the terminal device determines that the first threshold is -83 dBm.

Manner 3: The configuration information is one candidate threshold and one or more pieces of offset information; there is an association relationship between the candidate threshold and one quantity, of receive antennas, that may be supported by the wake-up receiver; and there is an association relationship between different offset information and different quantities, of receive antennas, that may be supported by the wake-up receiver. The terminal device determines first offset information from the one or more pieces of offset information based on the quantity, of receive antennas, supported by the wake-up receiver; and the terminal device determines the first threshold with reference to the candidate threshold and the first offset information.

Specifically, the configuration information received by the terminal device is one candidate threshold and one or more pieces of offset information. The candidate threshold may be an RSRP threshold, and the RSRP threshold may be set for the fact that the quantity, of receive antennas, supported by the wake-up receiver is 1. In the one or more pieces of offset information, different offset information corresponds to different quantities, of receive antennas, supported by the wake-up receiver. The terminal device determines one piece of offset information based on the quantity, of receive antennas, supported by the wake-up receiver of the terminal device, and determines one RSRP threshold with reference to the candidate threshold, and the RSRP threshold is the first threshold. For example, Table 3 shows a correspondence between the candidate RSRP threshold and the offset information that are configured by the network and the quantity, of receive antennas, supported by the wake-up receiver. As shown in Table 3, the terminal device receives the configuration information sent by the network device. If the quantity, of receive antennas, supported by the wake-up receiver of the terminal device is 2, the terminal device determines that the offset information is -3 dBm, and determines, with reference to the candidate threshold -80 dBm, that the first threshold is -83 dBm; or if the quantity, of receive antennas, supported by the wake-up receiver of the terminal device is 4, the terminal device determines that the offset information is -6 dBm, and determines, with reference to the candidate threshold -80 dBm, that the first threshold is -86 dBm.

Optionally, the second receiver or the first receiver performs measurement based on a first reference signal, and obtains a measurement result, where the measurement result and the first threshold meet a first relationship; and the terminal device enters the second state from the first state.

In a possible design, the terminal device changes the state based on the measurement result of the main receiver.

It may be understood that the main receiver may perform measurement based on an SSB, or may perform measurement based on another signal. This is not limited in this application.

It may be understood that, the measurement result and the first threshold meeting a first relationship may be that the measurement result is greater than or is greater than or equal to the first threshold, or may be that the measurement result is less than or is less than or equal to the first threshold. For example, if the measurement result obtained based on the SSB is less than or equal to the first threshold, the main receiver determines the RSRP threshold, and the terminal device receives the wake-up signal through the wake-up receiver; or if the measurement result obtained based on the SSB is greater than the first threshold, the main receiver determines the RSRP threshold, and the terminal device maintains a connection to the network device through the main receiver. The measurement result and the first threshold meeting the first relationship may alternatively be meeting another preset or preconfigured first relationship.

In a possible design, the terminal device changes the state based on the measurement result of the wake-up receiver.

It may be understood that the wake-up receiver may perform measurement based on a periodically sent reference signal, or may perform measurement based on another signal. This is not limited in this application.

It may be understood that, the measurement result and the first threshold meeting a first relationship may be that the measurement result is greater than or is greater than or equal to the first threshold, or may be that the measurement result is less than or is less than or equal to the first threshold. For example, if the measurement result obtained based on the reference signal is less than or equal to the first threshold, the wake-up receiver determines the RSRP threshold, and the terminal device receives the wake-up signal through the wake-up receiver; or if the measurement result obtained based on the reference signal is greater than the first threshold, the wake-up receiver determines the RSRP threshold, and the terminal device maintains a connection to the network device through the main receiver.

It may be understood that step S450 and step S460 may be used as an independent embodiment. Details are not described herein again in this application.

In an extended implementation, the first receiver and the second receiver may be replaced with different states that the terminal device is in. For example, the quantity of receive antennas of the first receiver may be a corresponding quantity of receive antennas when the terminal device is in the second state, and the quantity of receive antennas of the second receiver may be a corresponding quantity of receive antennas when the terminal device is in the first state. It may be understood that the wake-up receiver and the main receiver may alternatively be replaced with different states that the terminal device is in. For example, the quantity of receive antennas of the wake-up receiver may be a corresponding quantity of receive antennas when the terminal device is in the second state, and the quantity of receive antennas of the main receiver may be a corresponding quantity of receive antennas when the terminal device is in the first state. It may be understood that receiving, by the wake-up receiver, the wake-up signal may be replaced with receiving, by the terminal device, the wake-up signal, and maintaining a connection between the main receiver and the network device may be replaced with maintaining a connection between the terminal device and the network device.

Optionally, the first state and the second state may correspond to different RRC states. For example, the second state may be a new RRC state other than RRC_IDLE, RRC_INACTIVE, and RRC_CONNECTED. Optionally, the first state and the second state may correspond to different power states. For example, power consumption of the terminal device in the second state is lower than power consumption of the terminal device in the first state.

Similar to the foregoing steps, an implementation may be as follows:
The terminal device sends the first indication information to the network device, where the first indication information indicates the corresponding information about the quantity of receive antennas when the terminal device is in the second state; and the terminal device receives the wake-up signal sent by the network device.

The network device receives the first indication information sent by the terminal device, where the first indication information indicates the corresponding information about the quantity of receive antennas when the terminal device is in the second state; and the network device sends the wake-up signal to the terminal device based on the first indication information.

A terminal device includes: a processing unit, configured to determine first indication information, where the first indication information indicates corresponding information about a quantity of receive antennas when the terminal device is in a second state; and a transceiver unit, configured to send the first indication information to a network device, where the transceiver unit is further configured to receive a wake-up signal sent by the network device.

A network device includes: a transceiver unit, configured to receive first indication information sent by a terminal device; and a processing unit, configured to determine corresponding information about a quantity of receive antennas based on the first indication information when the terminal device is in a second state, where the transceiver unit is further configured to send a wake-up signal to the terminal device based on the corresponding information about the quantity of receive antennas when the terminal device is in the second state.

It may be understood that, in the foregoing embodiments, same equivalent replacements may be made for all step S410 to step S460 in FIG. 4. For explanations and beneficial effect of related content, refer to the corresponding method and apparatus embodiments provided above. Details are not described herein again.

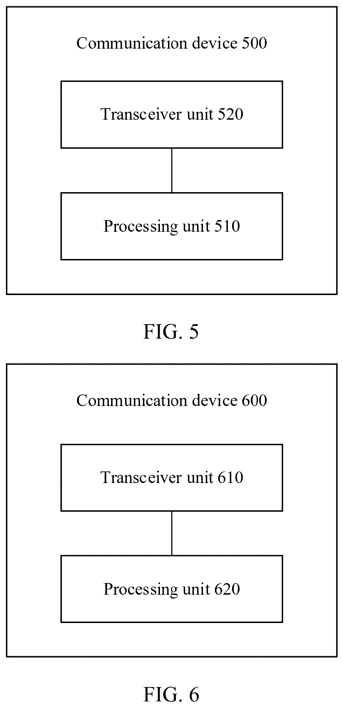

An embodiment of this application provides a communication device 500. The communication device may be used in the terminal device in the method embodiment in FIG. 4, or may be a component, for example, a chip, for implementing the method in the embodiment in FIG. 4. FIG. 5 is a block diagram of a communication device 500 according to an embodiment of this application. The communication device 500 includes:
a processing unit 510, configured to determine first indication information, where the first indication information indicates information about a quantity of receive antennas of a first receiver of the terminal device; and
a transceiver unit 520, configured to send the first indication information to a network device, where
the transceiver unit 520 is further configured to receive, through the first receiver, a wake-up signal sent by the network device.

In this embodiment of this application, the transceiver unit may be a sending unit when performing a sending step, and may be a receiving unit when performing a receiving step. In addition, the transceiver unit may be replaced with a transceiver, the sending unit may be replaced with a transmitter, and the receiving unit may be replaced with a receiver.

Optionally, the first indication information indicates the quantity, of receive antennas, supported by the first receiver.

Optionally, the first indication information indicates that the quantity of receive antennas of the first receiver is the same as a quantity of receive antennas of a second receiver.

Optionally, the first indication information indicates that the quantity of receive antennas of the first receiver is different from a quantity of receive antennas of the second receiver.

Optionally, the transceiver unit 520 is further configured to send second indication information to the network device, where the second indication information indicates the quantity, of receive antennas, supported by the first receiver.

Optionally, the first indication information indicates that the quantity, of receive antennas, supported by the first receiver is one of 1, 2, or 4.

Optionally, the first indication information indicates information about a frequency band supported by the first receiver, and there is an association relationship between the quantity, of receive antennas, supported by the first receiver and the information about the frequency band supported by the first receiver.

Optionally, the first indication information indicates the quantity, of receive antennas, supported by the second receiver, and the quantity, of receive antennas, supported by the first receiver is the same as the quantity, of receive antennas, supported by the second receiver.

Optionally, the transceiver unit 520 is further configured to receive configuration information; and the processing unit 510 is further configured to enable, based on the configuration information, the terminal device in a first state to enter a second state.

Optionally, the configuration information is a first threshold.

Optionally, the configuration information is a plurality of candidate thresholds, and there is an association relationship between different candidate thresholds and different quantities, of receive antennas, that may be supported by the first receiver; and the processing unit 510 is further configured to determine the first threshold from the plurality of candidate thresholds based on the quantity, of receive antennas, supported by the first receiver.

Optionally, the configuration information is one candidate threshold and one or more pieces of offset information; there is an association relationship between the candidate threshold and one quantity, of receive antennas, that may be supported by the first receiver; and there is an association relationship between the different offset information and different quantities, of receive antennas, that may be supported by the first receiver. The processing unit 510 is further configured to determine first offset information from the one or more pieces of offset information based on the quantity, of receive antennas, supported by the first receiver; and the processing unit 510 is further configured to determine the first threshold with reference to the candidate threshold and the first offset information.

Optionally, the transceiver unit 520 is further configured to receive a first reference signal through the first receiver or the second receiver; the processing unit 510 is further configured to perform measurement based on the first reference signal, and obtain a measurement result, where the measurement result and the first threshold meet a first relationship; and the processing unit 510 is further configured to enable the terminal device in the first state to enter the second state.

It should be understood that the communication device 500 shown in FIG. 5 can implement processes related to the network device in the foregoing method embodiments. Operations and/or functions of the modules in the communication device 500 are respectively intended to implement corresponding procedures in the foregoing method embodiments. For details, refer to the descriptions in the foregoing method embodiments. To avoid repetition, detailed descriptions are properly omitted herein. For explanations and beneficial effect of related content of any one of the apparatuses provided above, refer to the corresponding method embodiments provided above. Details are not described herein again.

An embodiment of this application provides another communication device 600. The communication device may be used in the network device in the method embodiment in FIG. 4, or may be a component, for example, a chip, for implementing the method in the embodiment in FIG. 4. FIG. 6 is a block diagram of a communication device 600 according to an embodiment of this application. The communication device 600 includes:
a transceiver unit 610, configured to receive first indication information sent by a terminal device; and
a processing unit 620, configured to determine information about a quantity of receive antennas of a first receiver of the terminal device based on the first indication information, where
the transceiver unit 610 is further configured to send a wake-up signal to the terminal device based on the information about the quantity of receive antennas of the first receiver.

Optionally, the transceiver unit 610 is further configured to send the first indication information to a core network.

Optionally, the first indication information indicates the quantity, of receive antennas, supported by the first receiver.

Optionally, the first indication information indicates that the quantity of receive antennas of the first receiver is the same as a quantity of receive antennas of a second receiver.

Optionally, the first indication information indicates that the quantity of receive antennas of the first receiver is different from a quantity of receive antennas of the second receiver.

Optionally, the transceiver unit 610 is further configured to receive second indication information sent by the terminal device, where the second indication information indicates the quantity, of receive antennas, supported by the first receiver.

Optionally, the first indication information indicates that the quantity, of receive antennas, supported by the first receiver is one of 1, 2, or 4.

Optionally, the first indication information indicates information about a frequency band supported by the first receiver, and there is an association relationship between the quantity, of receive antennas, supported by the first receiver and the information about the frequency band supported by the first receiver.

Optionally, the first indication information indicates the quantity, of receive antennas, supported by the second receiver, and the quantity, of receive antennas, supported by the first receiver is the same as the quantity, of receive antennas, supported by the second receiver.

Optionally, the transceiver unit 610 is further configured to send configuration information to the terminal device, where the configuration information is used by the terminal device to enter a first state or a second state.

Optionally, the configuration information is a first threshold.

Optionally, the configuration information is a plurality of candidate thresholds, and there is an association relationship between different candidate thresholds and different quantities, of receive antennas, that may be supported by the first receiver.

Optionally, the configuration information is one candidate threshold and one or more pieces of offset information; there is an association relationship between the candidate threshold and one quantity, of receive antennas, that may be supported by the first receiver; and there is an association relationship between the different offset information and different quantities, of receive antennas, that may be supported by the first receiver.

It should be understood that the communication device 600 shown in FIG. 6 can implement processes related to the network device in the foregoing method embodiments. Operations and/or functions of the modules in the communication device 600 are respectively intended to implement corresponding procedures in the foregoing method embodiments. For details, refer to the descriptions in the foregoing method embodiments. To avoid repetition, detailed descriptions are properly omitted herein. For explanations and beneficial effect of related content of any one of the apparatuses provided above, refer to the corresponding method embodiments provided above. Details are not described herein again.

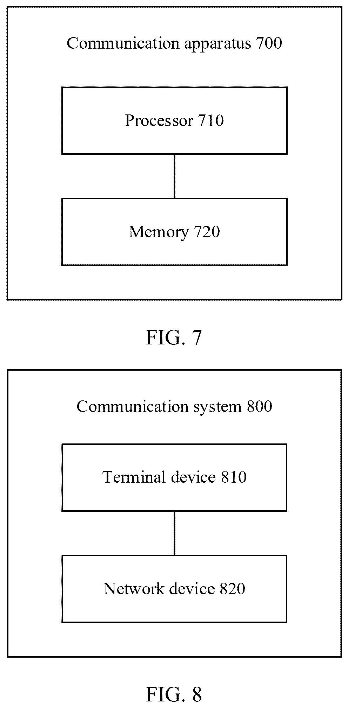

An embodiment of this application provides a communication apparatus 700. FIG. 7 is a block diagram of another communication apparatus according to an embodiment of this application. The communication apparatus 700 includes a processor 710. The processor 710 is coupled to at least one memory 720. The processor 710 is configured to read a computer program stored in the at least one memory 720, to perform the method in any possible implementation of embodiments of this application.

The processor 710 may be an integrated circuit chip, and has a signal processing capability. In an implementation process, steps in the foregoing method embodiments can be implemented through a hardware integrated logical circuit in the processor, or by using instructions in a form of software. The foregoing processor may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, or a discrete hardware component. The processor may implement or perform the methods, steps, and logical block diagrams that are disclosed in embodiments of this application. The general-purpose processor may be a microprocessor, or the processor may be any conventional processor or the like. The steps in the method disclosed with reference to embodiments of this application may be directly performed and completed by a hardware decoding processor, or may be performed and completed by using a combination of hardware in the decoding processor and a software module. The software module may be located in a mature storage medium in the art, for example, a random access memory, a flash memory, a read-only memory, a programmable read-only memory, an electrically erasable programmable memory, or a register. The storage medium is located in the memory. The processor reads information in the memory and completes the steps in the foregoing method in combination with hardware of the processor.

The memory 720 may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of an example but not limitative descriptions, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus dynamic random access memory (direct rambus RAM, DR RAM).

An embodiment of this application provides a communication chip. The communication chip includes a processor and a communication interface. The processor is configured to read instructions or a computer program, to perform the method in embodiments of this application.

An embodiment of this application provides a communication system 800. The communication system 800 includes the terminal device 810 and the network device 820 in the communication method provided in embodiments of this application. FIG. 8 is a block diagram of a communication system 800 according to an embodiment of this application.

An embodiment of this application further provides a computer-readable storage medium. The computer-readable storage medium stores a computer program used to implement the method in embodiments of this application. When the computer program is run on a computer, the computer is enabled to implement the method in the foregoing method embodiments.

An embodiment of this application further provides a computer program product. When the computer program product is run on a computer, the computer is enabled to perform the method in embodiments of this application.

It may be understood that sequence numbers of the foregoing processes do not mean an execution sequence in various embodiments of this application. The execution sequence of the processes should be determined based on functions and internal logic of the processes, and should not be construed as any limitation on the implementation processes of embodiments of this application.

It should be understood that, in this application, "when", "if", and "provided that" all mean that an apparatus performs corresponding processing in an objective situation, and are not intended to limit time, and the terms do not mean that the apparatus is required to perform a determining action during implementation, and do not mean any other limitation.

A person skilled in the art may understand that various numbers such as "first" and "second" in this application are merely used for distinguishing for ease of description, and are not used to limit the scope of embodiments of this application. A specific value of a number (which may also be referred to as an index), a specific value of a quantity, and a location in this application are merely used for illustration purposes, but are not unique representation forms, and are not used to limit the scope of embodiments of this application. Various numbers such as "first" and "second" in this application are also merely used for distinguishing for ease of description, and are not used to limit the scope of embodiments of this application.

In addition, the term "and/or" in this application describes only an association relationship for describing associated objects and represents that three relationships may exist. For example, A and/or B may represent the following three cases: Only A exists, both A and B exist, and only B exists. In addition, the character "/" in this specification usually represents an "or" relationship between the associated objects. The term "at least one" in this application may represent "one" and "two or more". For example, at least one of A, B, and C may represent the following seven cases: Only A exists, only B exists, only C exists, both A and B exist, both A and C exist, both C and B exist, and A, B, and C all exist.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each specific application, but it should not be considered that the implementation goes beyond the scope of this application.

It may be clearly understood by a person skilled in the art that, for the purpose of convenient and brief description, for detailed working processes of the foregoing system, apparatus, and unit, refer to corresponding processes in the foregoing method embodiments. Details are not described herein.

**In** the several embodiments provided in this application, it should be understood that the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. **In** addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, that is, may be located in one place, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims. The protection scope of this application is subject to the protection scope of the claims.

## Claims

1. A communication method, comprising:
sending, by a terminal device, first indication information to a network device, wherein the first indication information indicates information about a quantity of receive antennas of a first receiver of the terminal device; and
receiving, by the terminal device through the first receiver, a wake-up signal sent by the network device.

2. The method according to claim 1, wherein
the first indication information indicates the quantity, of receive antennas, supported by the first receiver.

3. The method according to claim 1 or 2, wherein
the first indication information indicates that the quantity of receive antennas of the first receiver is the same as a quantity of receive antennas of a second receiver.

4. The method according to claim 1, wherein
the first indication information indicates that the quantity of receive antennas of the first receiver is different from a quantity of receive antennas of the second receiver.

5. The method according to claim 1 or 4, comprising:
sending, by the terminal device, second indication information to the network device, wherein the second indication information indicates the quantity, of receive antennas, supported by the first receiver.

6. The method according to any one of claims 1 to 3, wherein
the first indication information indicates that the quantity, of receive antennas, supported by the first receiver is one of 1, 2, or 4.

7. The method according to claim 1, wherein
the first indication information indicates information about a frequency band supported by the first receiver, and there is an association relationship between the quantity, of receive antennas, supported by the first receiver and the information about the frequency band supported by the first receiver.

8. The method according to claim 1, wherein
the first indication information indicates a quantity, of receive antennas, supported by the second receiver; and
the quantity, of receive antennas, supported by the first receiver is the same as the quantity, of receive antennas, supported by the second receiver.

9. The method according to any one of claims 1 to 8, wherein the method further comprises:
receiving, by the terminal device, configuration information; and
entering, by the terminal device in a first state, a second state based on the configuration information.

10. The method according to claim 9, wherein
the configuration information is a first threshold.

11. The method according to claim 9, wherein
the configuration information is a plurality of candidate thresholds, and there is an association relationship between different candidate thresholds and different quantities, of receive antennas, that may be supported by the first receiver; and the method comprises:
determining, by the terminal device, the first threshold from the plurality of candidate thresholds based on the quantity, of receive antennas, supported by the first receiver.

12. The method according to claim 9, wherein
the configuration information is one candidate threshold and one or more pieces of offset information;
there is an association relationship between the candidate threshold and one quantity, of receive antennas, that may be supported by the first receiver; and
there is an association relationship between the different offset information and different quantities, of receive antennas, that may be supported by the first receiver; and the method comprises:
determining, by the terminal device, first offset information from the one or more pieces of offset information based on the quantity, of receive antennas, supported by the first receiver; and
determining, by the terminal device, the first threshold with reference to the candidate threshold and the first offset information.

13. The method according to any one of claims 10 to 12, comprising:
performing, by the second receiver or the first receiver, measurement based on a first reference signal, and obtaining a measurement result, wherein
the measurement result and the first threshold meet a first relationship; and
entering, by the terminal device, the second state from the first state.

14. A communication method, comprising:
receiving, by a network device, first indication information sent by a terminal device, wherein the first indication information indicates information about a quantity of receive antennas of a first receiver of the terminal device; and
sending, by the network device, a wake-up signal to the terminal device based on the first indication information.

15. The method according to claim 14, comprising:
sending, by the network device, the first indication information to a core network.

16. The method according to claim 14 or 15, wherein
the first indication information indicates the quantity, of receive antennas, supported by the first receiver.

17. The method according to any one of claims 14 to 16, wherein
the first indication information indicates that the quantity of receive antennas of the first receiver is the same as a quantity of receive antennas of a second receiver.

18. The method according to claim 14 or 15, wherein
the first indication information indicates that the quantity of receive antennas of the first receiver is different from a quantity of receive antennas of the second receiver.

19. The method according to claim 14, 15, or 18, comprising:
receiving, by the network device, second indication information sent by the terminal device, wherein the second indication information indicates the quantity, of receive antennas, supported by the first receiver.

20. The method according to any one of claims 14 to 17, wherein
the first indication information indicates that the quantity, of receive antennas, supported by the first receiver is one of 1, 2, or 4.

21. The method according to claim 14 or 15, wherein
the first indication information indicates information about a frequency band supported by the first receiver, and there is an association relationship between the quantity, of receive antennas, supported by the first receiver and the information about the frequency band supported by the first receiver.

22. The method according to claim 14 or 15, wherein
the first indication information indicates a quantity, of receive antennas, supported by the second receiver; and
the quantity, of receive antennas, supported by the first receiver is the same as the quantity, of receive antennas, supported by the second receiver.

23. The method according to any one of claims 14 to 22, wherein the method further comprises:
sending, by the network device, configuration information to the terminal device, wherein
the configuration information is used by the terminal device to enter a first state or a second state.

24. The method according to claim 23, wherein
the configuration information is a first threshold.

25. The method according to claim 23, wherein
the configuration information is a plurality of candidate thresholds, and there is an association relationship between different candidate thresholds and different quantities, of receive antennas, that may be supported by the first receiver.

26. The method according to claim 23, wherein
the configuration information is one candidate threshold and one or more pieces of offset information;
there is an association relationship between the candidate threshold and one quantity, of receive antennas, that may be supported by the first receiver; and
there is an association relationship between the different offset information and different quantities, of receive antennas, that may be supported by the first receiver.

27. A terminal device, comprising:
a processing unit, configured to determine first indication information, wherein the first indication information indicates information about a quantity of receive antennas of a first receiver of the terminal device; and
a transceiver unit, configured to send the first indication information to a network device, wherein
the transceiver unit is further configured to receive, through the first receiver, a wake-up signal sent by the network device.

28. The device according to claim 27, wherein
the first indication information indicates the quantity, of receive antennas, supported by the first receiver.

29. The device according to claim 27 or 28, wherein
the first indication information indicates that the quantity of receive antennas of the first receiver is the same as a quantity of receive antennas of a second receiver.

30. The device according to claim 27, wherein
the first indication information indicates that the quantity of receive antennas of the first receiver is different from a quantity of receive antennas of the second receiver.

31. The device according to claim 27 or 30, wherein
the transceiver unit is further configured to send second indication information to the network device, wherein the second indication information indicates the quantity, of receive antennas, supported by the first receiver.

32. The device according to any one of claims 27 to 29, wherein
the first indication information indicates that the quantity, of receive antennas, supported by the first receiver is one of 1, 2, or 4.

33. The device according to claim 27, wherein
the first indication information indicates information about a frequency band supported by the first receiver, and there is an association relationship between the quantity, of receive antennas, supported by the first receiver and the information about the frequency band supported by the first receiver.

34. The device according to claim 27, wherein
the first indication information indicates a quantity, of receive antennas, supported by the second receiver; and
the quantity, of receive antennas, supported by the first receiver is the same as the quantity, of receive antennas, supported by the second receiver.

35. The device according to any one of claims 27 to 34, wherein
the transceiver unit is further configured to receive configuration information; and
the processing unit is further configured to enable, based on the configuration information, the terminal device in a first state to enter a second state.

36. The device according to claim 35, wherein
the configuration information is a first threshold.

37. The device according to claim 35, wherein
the configuration information is a plurality of candidate thresholds, and there is an association relationship between different candidate thresholds and different quantities, of receive antennas, that may be supported by the first receiver; and
the processing unit is further configured to determine the first threshold from the plurality of candidate thresholds based on the quantity, of receive antennas, supported by the first receiver.

38. The device according to claim 35, wherein
the configuration information is one candidate threshold and one or more pieces of offset information;
there is an association relationship between the candidate threshold and one quantity, of receive antennas, that may be supported by the first receiver;
there is an association relationship between the different offset information and different quantities, of receive antennas, that may be supported by the first receiver;
the processing unit is further configured to determine first offset information from the one or more pieces of offset information based on the quantity, of receive antennas, supported by the first receiver; and
the processing unit is further configured to determine the first threshold with reference to the candidate threshold and the first offset information.

39. The device according to any one of claims 36 to 38, wherein
the transceiver unit is further configured to receive a first reference signal through the first receiver or the second receiver;
the processing unit is further configured to perform measurement based on the first reference signal, and obtain a measurement result, wherein
the measurement result and the first threshold meet a first relationship; and
the processing unit is further configured to enable the terminal device in the first state to enter the second state.

40. A network device, comprising:
a transceiver unit, configured to receive first indication information sent by a terminal device; and
a processing unit, configured to determine information about a quantity of receive antennas of a first receiver of the terminal device based on the first indication information, wherein
the transceiver unit is further configured to send a wake-up signal to the terminal device based on the information about the quantity of receive antennas of the first receiver.

41. The device according to claim 40, wherein
the transceiver unit is further configured to send the first indication information to a core network.

42. The device according to claim 40 or 41, wherein
the first indication information indicates the quantity, of receive antennas, supported by the first receiver.

43. The device according to any one of claims 40 to 42, wherein
the first indication information indicates that the quantity of receive antennas of the first receiver is the same as a quantity of receive antennas of a second receiver.

44. The device according to claim 40 or 41, wherein
the first indication information indicates that the quantity of receive antennas of the first receiver is different from a quantity of receive antennas of the second receiver.

45. The device according to claim 40, 41, or 44, wherein
the transceiver unit is further configured to receive second indication information sent by the terminal device, wherein the second indication information indicates the quantity, of receive antennas, supported by the first receiver.

46. The device according to any one of claims 40 to 43, wherein
the first indication information indicates that the quantity, of receive antennas, supported by the first receiver is one of 1, 2, or 4.

47. The device according to claim 40 or 41, wherein
the first indication information indicates information about a frequency band supported by the first receiver, and there is an association relationship between the quantity, of receive antennas, supported by the first receiver and the information about the frequency band supported by the first receiver.

48. The device according to claim 40 or 41, wherein
the first indication information indicates a quantity, of receive antennas, supported by the second receiver; and
the quantity, of receive antennas, supported by the first receiver is the same as the quantity, of receive antennas, supported by the second receiver.

49. The device according to any one of claims 40 to 48, wherein
the transceiver unit is further configured to send configuration information to the terminal device, wherein
the configuration information is used by the terminal device to enter a first state or a second state.

50. The device according to claim 49, wherein
the configuration information is a first threshold.

51. The device according to claim 49, wherein
the configuration information is a plurality of candidate thresholds, and there is an association relationship between different candidate thresholds and different quantities, of receive antennas, that may be supported by the first receiver.

52. The device according to claim 49, wherein
the configuration information is one candidate threshold and one or more pieces of offset information;
there is an association relationship between the candidate threshold and one quantity, of receive antennas, that may be supported by the first receiver; and
there is an association relationship between the different offset information and different quantities, of receive antennas, that may be supported by the first receiver.

53. A communication apparatus, comprising a processor, wherein the processor is coupled to at least one memory, and the processor is configured to read a computer program stored in the at least one memory, to perform the method according to any one of claims 1 to 13, or the method according to any one of claims 14 to 26.

54. A computer-readable storage medium, wherein the computer-readable storage medium is configured to store a computer program; and when the computer program is run on a computer, the computer is enabled to perform the method according to any one of claims 1 to 13, or the computer is enabled to perform the method according to any one of claims 14 to 26.

55. A computer program product, wherein when the computer program product is run on a computer, the computer is enabled to perform the method according to any one of claims 1 to 13, or the computer is enabled to perform the method according to any one of claims 14 to 26.

56. A chip, comprising a processor and a communication interface, wherein the processor is configured to read instructions or a computer program, to perform the method according to any one of claims 1 to 13, or enable the computer to perform the method according to any one of claims 14 to 26.

57. A communication system, comprising the terminal device according to any one of claims 27 to 39 and the network device according to any one of claims 40 to 52.
